# EUROPEAN PATENT SPECIFICATION

(11) **EP 3 388 700 B1**
(45) Date of publication and mention of the grant of the patent: **26.06.2019**
(21) Application number: 18167246.0
(22) Date of filing: 13.04.2018
(51) Int. Cl.: F16C 9/04, F16C 17/02, F16C 33/10

(54) **CONNECTING ROD BEARING AND BEARING DEVICE**
PLEUELLAGER UND LAGERVORRICHTUNG
PALIER À TIGE DE CONNEXION ET DISPOSITIF DE PALIER

(30) Priority: 14.04.2017 JP 2017080515
(43) Date of publication of application: 17.10.2018
(73) Proprietor: Daido Metal Company Ltd., Nagoya (JP)
(72) Inventor: KATO, Kenta, Aichi (JP); HIRAYAMA, Masahiro, Aichi (JP)
(74) Representative: Beckmann, Claus

(56) References cited:
- EP-A1- 3 054 180
- DE-A1- 19 801 200

## Description

### TECHNICAL FIELD

The present invention relates to a connecting rod bearing of an internal combustion engine. More particularly, the present invention relates to a connecting rod bearing configured so that lubricating oil supplied to an inner peripheral surface of a main bearing which supports a crank shaft is supplied, through an internal lubricating oil path of the crank shaft, to an inner peripheral surface of the connecting rod bearing which rotatably supports a crank pin of the crank shaft coupled to a connecting rod. The present invention also relates to a bearing device using this connecting rod bearing.

### BACKGROUND OF THE INVENTION

An internal combustion engine has a connecting rod which couples a piston and a crank shaft to convert reciprocation of the piston into rotational motion of the crank shaft. The connecting rod includes a connecting rod body portion and a connecting rod cap portion (the connecting rod body portion may be further divided into several parts). At one end of the connecting rod body portion, the connecting rod has a small end portion which supports a piston pin, and the small end portion has a bush holding hole. The other end of the connecting rod body portion is combined with the connecting rod cap portion by a bolt to form a large end portion which supports a crank pin. The large end portion has a cylindrical bearing holding hole which holds a connecting rod bearing and which is formed by a semi-cylindrical first bearing holding hole in the connecting rod body portion and a semi-cylindrical second bearing holding hole in the connecting rod cap portion when end faces of the connecting rod body portion and the connecting rod cap portion are butted against each other.

A cylindrical bush bearing is inserted into the bush holding hole in the small end portion of the connecting rod, and the piston pin is thereby supported. On the other hand, a pair of half bearings, which are formed so as to engage with the shapes of the first bearing holding hole of the connecting rod body portion and the second bearing holding hole of the connecting rod cap portion, respectively, are inserted into the bearing holding hole of the large end portion. When the connecting rod body portion side and the connecting rod cap portion side are combined, the pair of half bearings becomes cylindrically shaped, and supports the crank pin (hereinafter, the pair of half bearings combined are referred to as a connecting rod bearing).

Conventionally, an oil path structure as shown in JP 4431205 B has been applied to a connecting rod of a middle or high speed internal combustion engine used in a vessel, an electric generator, or the like. That is, in the connecting rod large end portion, the first bearing holding hole includes a first supply groove extending from a circumferential end face on a forward side of a rotation direction of the crank pin toward a circumferentially central portion side, and a second supply groove extending from a circumferential end face on a backward side of the rotation direction of the crank pin toward the circumferentially central portion side. The second bearing holding hole includes a third supply groove extending over the entire length in a circumferential direction. Moreover, the third supply groove is brought into communication with the first supply groove and the second supply groove at the places where their respective circumferential end faces are butted against each other.

Furthermore, the connecting rod includes a communication path which allows communication between the small end portion and one of the first supply groove, the second supply groove, and the third supply groove in order to supply lubricating oil to the small end portion of the connecting rod.

The crank pin includes a cylindrical barrel portion, a lubricating oil path extending through the cylindrical barrel portion, and at least one exit opening of the lubricating oil path formed on an outer peripheral surface of the cylindrical barrel portion. The exit opening communicates with a space between the outer peripheral surface of the cylindrical barrel portion and a slide surface of the connecting rod bearing. Therefore, the lubricating oil is fed by pressure to the connecting rod bearing via the lubricating oil path and the exit opening.

The half bearing (hereinafter referred to as a first half bearing) held onto the connecting rod body portion side, of the connecting rod bearing composed of the pair of half bearings, includes a first partial groove extending from the circumferential end face on a forward side of the rotation direction of the crank pin toward a circumferentially central portion side, and a second partial groove extending from the circumferential end face on a backward side of the rotation direction of the crank pin toward the circumferentially central portion side, and also includes at least one oil hole passing through from an inner surface of the first partial groove or the second partial groove to a bearing outer peripheral surface of the first half bearing. The half bearing (hereinafter referred to as a second half bearing) held onto the connecting rod cap portion side includes an oil groove extending over the entire length in the circumferential direction of the second half bearing, and also includes at least one oil hole passing through from an inner surface of the oil groove to a bearing outer peripheral surface of the second half bearing.

A part of the lubricating oil fed by pressure to the connecting rod bearing is supplied to the first supply groove and the second supply groove formed in the first bearing holding hole of the connecting rod and to the third supply groove formed in the second bearing holding hole, through the first partial groove and the second partial groove formed in the first half bearing, the oil groove formed in the second half bearing, and the oil holes formed in the pair of half bearings, and further supplied to the connecting rod small end portion through the communication path formed in the connecting rod.

Note that the connecting rod bearing includes a back metal layer and a slide layer, and the slide layer constitutes slide surfaces of the half bearings. The slide layer is made of a bearing alloy such as a white alloy (tin alloy), an aluminum alloy, or a copper alloy. In addition, the surface of the slide layer may be covered with a surface layer (overlay layer) of a lead-based material, a tin-based material, an aluminum alloy, synthetic resin, or the like by means of electroplating, vacuum deposition, or spraying.

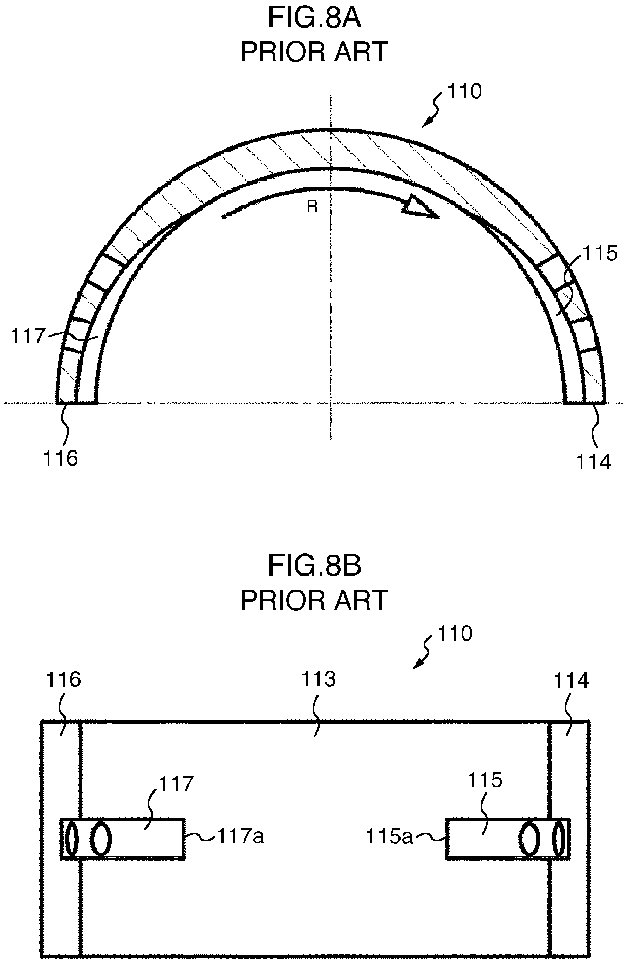

As a structural problem of the connecting rod bearing described above, there is the occurrence of cavitation erosion at an end of the first partial groove on its circumferentially central portion side in the first half bearing. Here, the mechanism of the occurrence of cavitation erosion in a configuration of a prior-art connecting rod bearing is described with reference to Fig. 8A, Fig. 8B, Fig. 9, and Fig. 10. In a configuration of a first half bearing 110 according to the prior art, as shown in Fig. 8A and Fig. 8B, there are formed, on a slide surface (inner peripheral surface) 113 side of the first half bearing 110, a first partial groove 115 extending from a circumferential end face 114 on a forward side of a rotation direction R of a crank pin 50 toward a circumferentially central portion side, and a second partial groove 117 extending from a circumferential end face 116 on a backward side of the rotation direction R of the crank pin 50 toward the circumferentially central portion side. Each of the first partial groove 115 and the second partial groove 117 becomes gently shallow and ends on the bearing slide surface 113 (as a terminal), so that the slide surface 113 is formed between an end 115a of the first partial groove 115 on its circumferentially central portion side and an end 117a of the second partial groove 117 on its circumferentially central portion side.

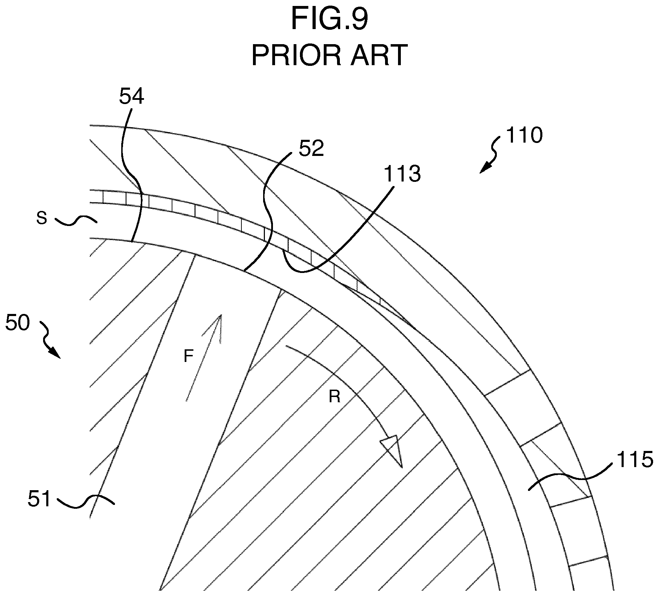

As described above, an exit opening 52 of the crank pin 50 communicates with a space between an outer peripheral surface 54 of a cylindrical barrel portion of the crank pin and the slide surface 113 of the connecting rod bearing. However, as shown in Fig. 9, while the exit opening 52 of the crank pin 50 is located above the slide surface 113 between the circumferentially central portion side end 115a of the first partial groove 115 and the circumferentially central portion side end 117a of the second partial groove 117, the space S between the outer peripheral surface 54 of the cylindrical barrel portion of the crank pin 50 and the slide surface 113 of the first half bearing 110 is small, and therefore, the pressure of lubricating oil near the exit opening 52 in a lubricating oil path 51 is in an extremely high state due to the effect of centrifugal force resulting from the rotation of the crank pin 50.

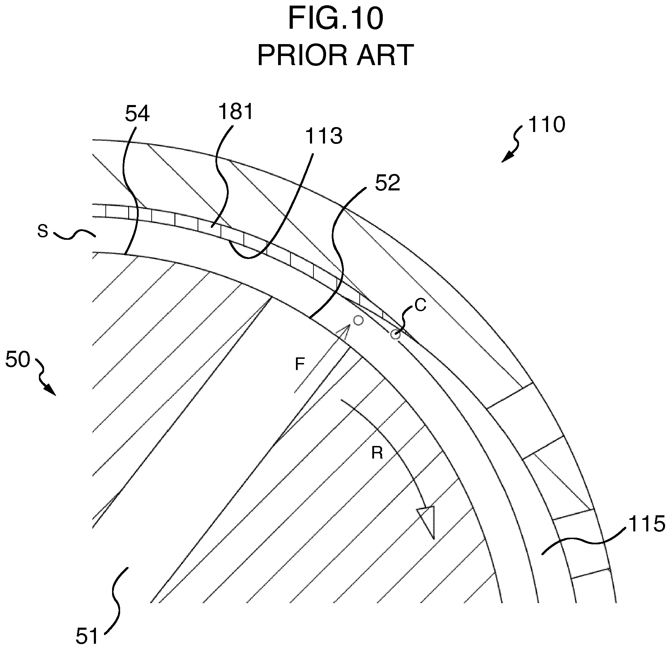

As shown in Fig. 10, at the moment when communication between the exit opening 52 of the crank pin 50 and the first partial groove 115 is started, the lubricating oil instantaneously flows rapidly into the first partial groove 115 from the lubricating oil path 51 due to the difference between the pressure of the lubricating oil within the lubricating oil path 51 of the crank pin 50, and the pressure of the lubricating oil within the space S between the outer peripheral surface 54 of the cylindrical barrel portion of the crank pin 50 and the vicinity of the circumferential end 115a on a circumferential direction central portion side of the first partial groove 115. In this instance, the pressure of the lubricating oil which has flowed out from the lubricating oil path 51 rapidly decreases, and becomes smaller than or equal to vapor pressure, thereby producing cavities (air bubbles) C in the lubricating oil. The cavities C break when the pressure becomes equal to or more than the vapor pressure, and pressure flow (micro jet) of the lubricating oil is generated. When this occurs in the vicinity of the circumferential end 115a on the circumferential direction central portion side of the first partial groove 115 of the first half bearing 110, a slide layer 181 located in the vicinity of the circumferential end 115a is eroded (cavitation erosion). In particular, the slide layer 181 of the connecting rod bearing is relatively soft, and therefore easily eroded. The surface state of the eroded slide layer 181 appears rough in general. The rough surface has an adverse effect on the formation of a lubricating oil film, and leads to secondary damage such as seizure of a bearing. Moreover, the slide layer 181 which has peeled due to the erosion becomes mixed to the lubricating oil as a foreign matter, and may damage the slide surface of the connecting rod bearing and other components.

### SUMMARY OF THE INVENTION

In order to address the problem of this cavitation erosion, it has been suggested to provide a secondary groove formed with a predetermined pitch in the vicinity of the terminal of an oil groove (see JP 2007-225079 A), and to provide an extension groove (thin groove) (see JP 2001-050252 A).

However, although these prior arts can be expected to have a certain effect on the suppression of cavitation erosion in the vicinity of the terminal of the oil groove, there has been the problem that erosion of the slide layer is unavoidable when cavities are produced since there is no structure which breaks the cavities without damaging the slide layer.

Therefore, an object of the present invention is to provide a connecting rod bearing and a bearing device in which cavitation erosion does not occur in a slide layer even when cavities are produced in lubricating oil.

In order to solve the problem described above, according to one aspect of the present invention, there is provided a connecting rod bearing for rotatably supporting a crank pin of a crank shaft of an internal combustion engine, the crank pin including a cylindrical barrel portion, a lubricating oil path extending through the cylindrical barrel portion, and at least one exit opening of the lubricating oil path formed on an outer peripheral surface of the cylindrical barrel portion, wherein
the connecting rod bearing includes a first half bearing and a second half bearing, the first half bearing and the second half bearing being combined into a cylindrical shape by bringing respective circumferential end faces of the first half bearing and the second half bearing into contact with each other,
each of the first half bearing and the second half bearing including a back metal layer and a slide layer, the slide layer constituting a slide surface of each half bearing,
the second half bearing including, on the slide surface (inner peripheral surface) side, an oil groove extending over the entire length of a circumferential direction of the second half bearing, and at least one oil hole passing through from an inner surface of the oil groove to a bearing outer peripheral surface of the second half bearing,
the first half bearing including, on the slide surface (inner peripheral surface) side, a first partial groove extending from the circumferential end face of the first half bearing on a forward side of a rotation direction of the crank pin toward a circumferentially central portion side of the first half bearing, and a second partial groove extending from the circumferential end face of the first half bearing on a backward side of the rotation direction of the crank pin toward the circumferentially central portion side, and
the oil groove of the second half bearing, and the first partial groove and the second partial groove of the first half bearing communicating with each other when the respective circumferential end faces of the first half bearing and the second half bearing are brought into contact with each other, and wherein
the first half bearing includes a cylindrical depression formed so as to communicate with the first partial groove at its circumferential end on the circumferentially central portion side,
the slide surface between a circumferential end of the second partial groove that is located on the circumferentially central portion side of the first half bearing and a circumferential end of the cylindrical depression that is located on the circumferentially central portion side extends at a circumferential angle (θ1) of 80° to 160°,
an axial center line of the cylindrical depression extends toward an axial center line of the first half bearing,
an inner diameter (ID1) of the cylindrical depression measured on the slide surface is 100% to 150% of an axial length (W1) of the first partial groove that is measured at a location where the first partial groove communicates with the cylindrical depression,
a depth (D1) of the first partial groove that is measured at the location where the first partial groove communicates with the cylindrical depression is equal to or more than a thickness (T1) of the slide layer, and
a maximum depth (D2) of the cylindrical depression is equal to or more than the depth (D1) of the first partial groove at the location where the first partial groove communicates with the cylindrical depression, but is configured so that the cylindrical depression does not pass through to a bearing outer peripheral surface of the first half bearing.

Further, the cylindrical depression can be formed so that, in a cross section including the axial center line of the cylindrical depression and perpendicular to the connecting rod bearing, an angle (θ2) of a side surface of the cylindrical depression with respect to a line perpendicular to the axial center line is 85° to 95°.

### BRIEF DESCRIPTION OF THE DRAWINGS

Fig. 1 is a sectional view showing a bearing device of the present invention including a connecting rod, a connecting rod bearing, and a crank pin;
Fig. 2 is a sectional view of a connecting rod bearing according to an embodiment of the present invention;
Fig. 3 is a bottom plan view in which a first half bearing shown in Fig. 2 is seen from an inner peripheral surface side;
Fig. 4 is a bottom plan view in which a second half bearing shown in Fig. 2 is seen from the inner peripheral surface side;
Fig. 5 is a sectional view showing an effect of the first half bearing configuration according to the embodiment of the present invention;
Fig. 6 is a sectional view showing the effect of the first half bearing configuration according to the embodiment of the present invention;
Fig. 7 is an enlarged sectional view showing the first half bearing configuration according to the embodiment of the present invention, in detail;
Fig. 8A is a sectional view of a first half bearing of a prior art;
Fig. 8B is a bottom plan view in which the first half bearing shown in Fig. 8A is seen from an inner peripheral surface side;
Fig. 9 is a sectional view showing an effect of the first half bearing configuration of the prior art; and
Fig. 10 is a sectional view showing the effect of the first half bearing configuration of the prior art.

### DESCRIPTION OF THE EMBODIMENTS

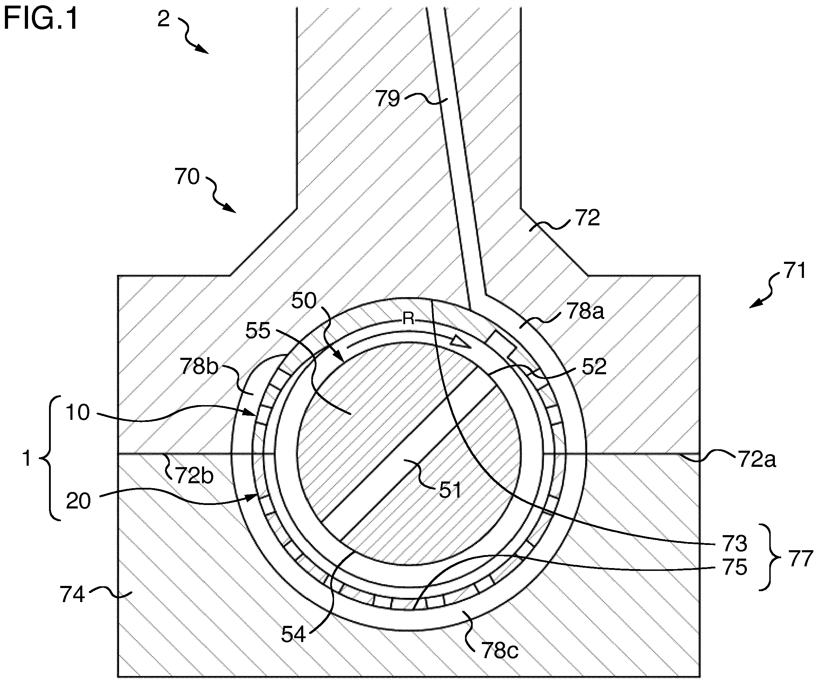

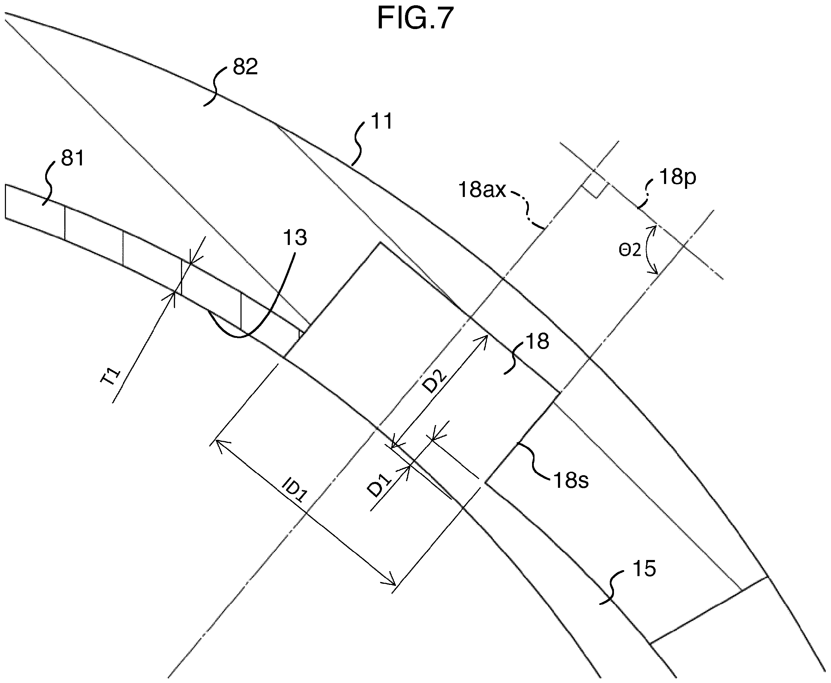

Hereinafter, an embodiment of the present invention will be described with reference to Figs. 1 to 7.

Fig. 1 is a sectional view showing the structure of a bearing device 2 including a crank pin 50, a connecting rod 70, and a connecting rod bearing 1 internally installed in a large end portion of the connecting rod 70.

The crank pin 50 includes a cylindrical barrel portion 55, a lubricating oil path 51 extending through the cylindrical barrel portion 55, and at least one exit opening 52 of the lubricating oil path 51 formed on an outer peripheral surface 54 of the cylindrical barrel portion 55.

The connecting rod 70 has a cylindrical bearing holding hole 77 which holds the connecting rod bearing 1 and is formed when a semi-cylindrical first bearing holding hole 73 formed in an end face of a connecting rod body portion 72 and a semi-cylindrical second bearing holding hole 75 formed in an end face of a connecting rod cap portion 74 are butted against each other.

The first bearing holding hole 73 includes a first supply groove 78a extending from an end face 72a on a forward side of a rotation direction of the crank pin 50 toward a circumferentially central portion side, and a second supply groove 78b extending from an end face 72b on a backward side of the rotation direction of the crank pin 50 toward the circumferentially central portion side.

The second bearing holding hole 75 includes a third supply groove 78c extending over the entire length in a circumferential direction.

The third supply groove 78c is brought into communication with the first supply groove 78a and the second supply groove 78b by butting the end faces of the connecting rod body portion 72 and the connecting rod cap portion 74 against each other.

The connecting rod body portion 72 includes a connecting rod small end portion which rotatably supports a piston pin (not shown), and also includes a communication path 79 which allows communication between the connecting rod small end portion and one of the first supply groove 78a, the second supply groove 78b, and the third supply groove 78c.

A pair of half bearings (the connecting rod bearing 1) is inserted into an inner peripheral surface of the connecting rod 70. The pair of half bearings is formed so as to engage with the respective shapes of the first bearing holding hole 73 and the second bearing holding hole 75 of the connecting rod body portion 72 and the connecting rod cap portion 74 being divided, and are combined into a cylindrical shape by butting the end faces of the connecting rod body portion 72 and the connecting rod cap portion 74 against each other.

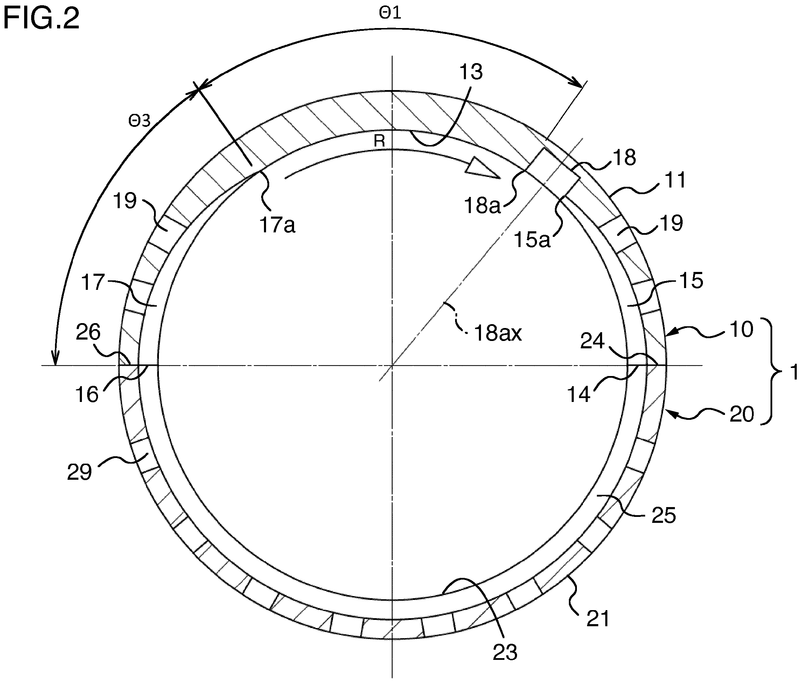

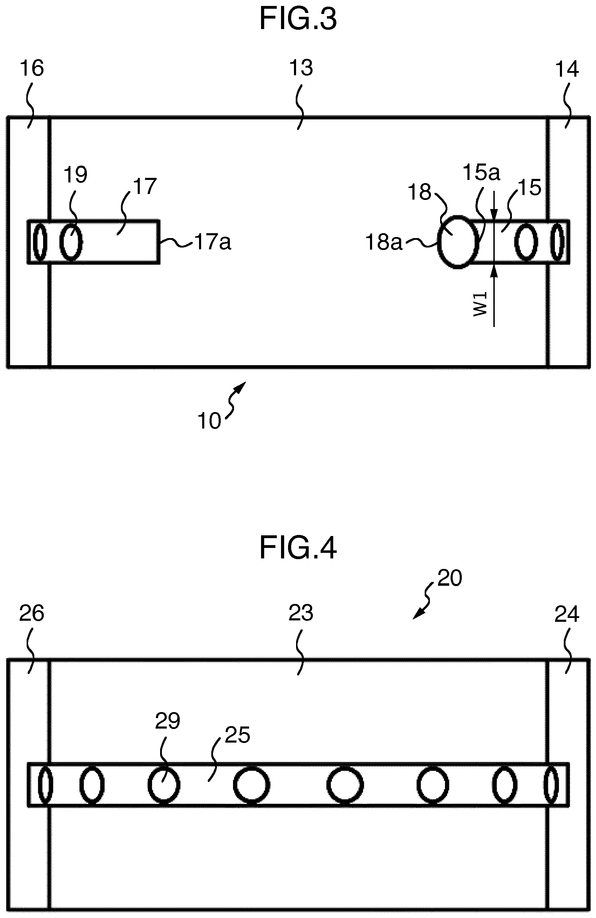

As shown in Fig. 2 and Fig. 4, a second half bearing 20 includes, on a slide surface 23 side, an oil groove 25 of a certain depth extending over the entire length in a circumferential direction of the second half bearing 20, and also includes at least one oil hole 29 formed in the oil groove 25 so as to pierce to a bearing outer peripheral surface 21.

Fig. 3 shows a configuration on an inner surface side of a first half bearing 10 in Fig. 2. Fig. 4 shows a configuration on an inner surface side of the second half bearing 20 in Fig. 2.

As shown in Fig. 2 and Fig. 3, the first half bearing 10 includes, on a slide surface 13 side, a first partial groove 15 extending from a circumferential end face 14 on the forward side of the rotation direction R of the crank pin 50 toward a circumferentially central portion side, and a second partial groove 17 extending from a circumferential end face 16 on the backward side of the rotation direction R of the crank pin 50 toward the circumferentially central portion side. The first half bearing 10 also includes a cylindrical depression 18 formed so as to communicate with the first partial groove 15 at a circumferential end 15a on the circumferentially central portion side of the first partial groove 15. Therefore, the slide surface 13 extends between a circumferential end 17a on a circumferentially central portion side of the second partial groove 17 of the first half bearing 10 and a circumferential end 18a on a circumferentially central portion side of the cylindrical depression 18, and two oil holes 19 are formed in the first partial groove 15 and the second partial groove 17, respectively, so as to pierce to a bearing outer peripheral surface 11.

The depths of the first partial groove 15 and the second partial groove 17 measured as a radial direction distance from the slide surface 13 gradually decrease from the circumferential end face 14 and 16 sides of the first half bearing 10 toward the circumferentially central portion side.

Furthermore, as shown in Fig. 2, the first half bearing 10 and the second half bearing 20 become a cylindrical shape by butting their respective circumferential end faces 14, 16, 24, and 26 against each other. Here, the oil groove 25 of the second half bearing 20 is brought into communication with the first partial groove 15 and the second partial groove 17 of the first half bearing 10 at the places where their respective circumferential end faces 14, 16, 24, and 26 are butted against each other.

Owing to the present structure, a part of the lubricating oil fed by pressure to the connecting rod bearing 1 is supplied to the first supply groove 78a and the second supply groove 78b formed in the first bearing holding hole 73 of the connecting rod 70 and to the third supply groove 78c formed in the second bearing holding hole 75, through the first partial groove 15 and the second partial groove 17 formed in the first half bearing 10, the oil groove 25 formed in the second half bearing 20, and the oil holes 19 and 29 formed in the pair of half bearings, and further supplied to the small end portion of the connecting rod 70 through the communication path 79 formed in the connecting rod 70.

More detailed structure of the connecting rod bearing 1 in the embodiment of the present invention is described with reference to Figs. 2 to 4 and Fig. 7. Fig. 2 shows the connecting rod bearing 1 composed of the first half bearing 10 and the second half bearing 20.

The connecting rod bearing 1 has the following dimensions.
Outer diameter: φ200 mm
Thickness: 5 mm
Entire width: 100 mm

Moreover, the first half bearing 10 has the following dimensions.

Depth (radial direction distance) of the first partial groove 15 from the slide surface 13 in the circumferential end face 14 on the forward side of the rotation direction R of the crank pin 50: 2 mm

Depth (radial direction distance) of the second partial groove 17 from the slide surface 13 in the circumferential end face 16 on the backward side of the rotation direction R of the crank pin 50: 2 mm

Length (W1) of the first partial groove 15 and the second partial groove 17 in an axial direction on the slide surface 13: 12 mm

Inner diameter (ID1) of the cylindrical depression 18: 15 mm

Thickness (T1) of a slide layer 81: 0.5 mm

Depth (D1) of the first partial groove at the communication portion 15a between the first partial groove 15 and the cylindrical depression 18: 0.6 mm

Depth (D2) of the cylindrical depression 18: 3 mm

Circumferential angle (θ1) of the slide surface between the circumferential end 17a on the circumferentially central portion side of the second partial groove 17 of the first half bearing 10 and the circumferential end 18a on the circumferentially central portion side of the cylindrical depression 18: 80°

Angle (θ2) between a plane 18p perpendicular to an axial center line 18ax of the cylindrical depression 18 and a side surface of the cylindrical depression 18: 90°

Note that the dimensions shown herein are mere examples, and the present invention is not limited to these dimensions. In addition, a circumferential angle (θ3) which defines the length of the second partial groove 17 from the circumferential end face 16 on the backward side of the rotation direction of the crank pin 50 to the circumferential end 17a on the circumferentially central portion side may be 10° to 50°.

Each of the first half bearing 10 and the second half bearing 20 includes a back metal layer 82 and the slide layer 81, the slide layers 81 constitute slide surfaces 13 and 23 of the half bearings 10 and 20. The slide layer 81 is an alloy layer made of a white alloy (tin alloy), an aluminum alloy, a copper alloy, or the like. The back metal layer 82 can be an iron alloy such as hypoeutectoid steel in which the content of carbon is 0.05 to 0.35 percent by mass.

As shown in Fig. 2 and Fig. 3, in the first half bearing 10, the cylindrical depression 18 is formed adjacent to the circumferential end 15a on the circumferentially central portion side of the first partial groove 15. The aforementioned axial center line 18ax of the cylindrical depression 18 is formed so as to extend toward the center (axial center line) of the first half bearing 10.

A circumferential angle (θ1) of the slide surface between the circumferential end 17a on the circumferentially central portion side of the second partial groove 17 of the first half bearing 10 and the circumferential end 18a on the circumferentially central portion side of the cylindrical depression 18 is preferably 80° to 160° in order to support a load produced from a combustion chamber.

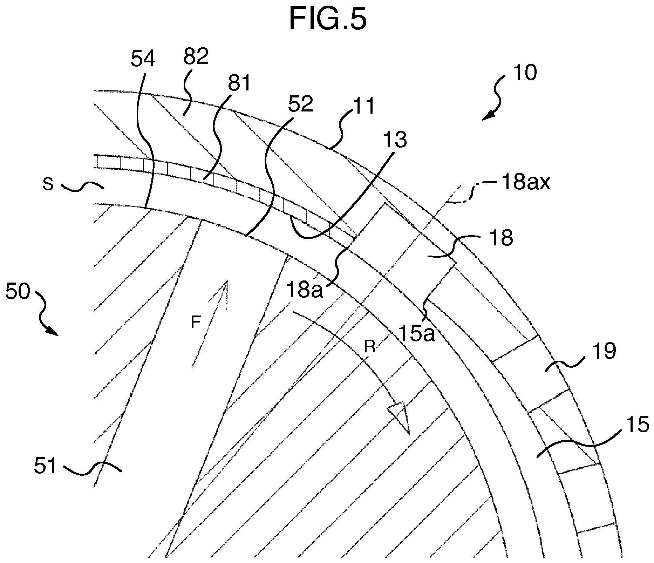

Now, a detailed configuration and action (effect) of the above cylindrical depression 18 of the first half bearing 10 are described with reference to Figs. 5 to 7. Fig. 5 shows a state where the exit opening 52 of the crank pin 50 is located above the slide surface 13 formed between the circumferential end 17a on the circumferentially central portion side of the second partial groove 17 of the first half bearing 10 and the circumferential end 18a on the circumferentially central portion side of the cylindrical depression 18. In the state in Fig. 5, a space S between the outer peripheral surface 54 of the cylindrical barrel portion 55 of the crank pin 10 and the slide surface 13 of the first half bearing 10 is small, and therefore, the pressure of the lubricating oil near the exit opening 52 in the lubricating oil path 51 is in an extremely high state due to the effect of centrifugal force resulting from the rotation of a crank shaft (see a flow direction F of the lubricating oil).

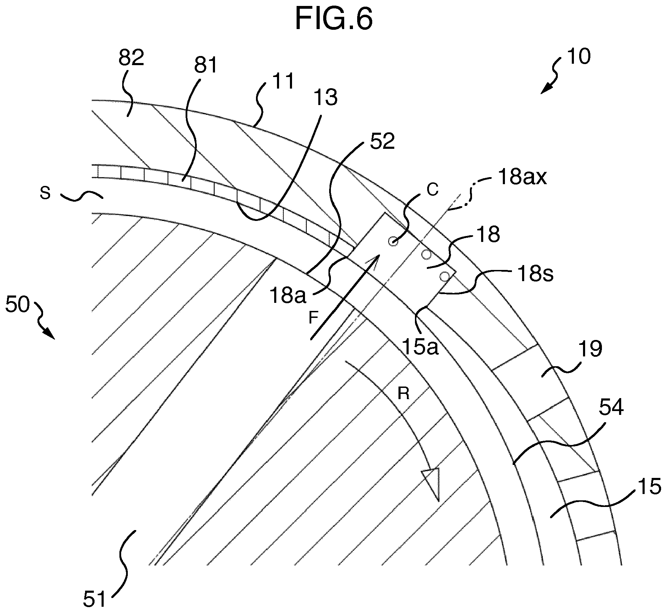

At the moment when communication between the exit opening 52 of the crank pin 50 and the cylindrical depression 18 is started as shown in Fig. 6, high-pressure lubricating oil affected by the centrifugal force instantaneously flows rapidly into the cylindrical depression 18 from the lubricating oil path 51 due to the difference between the pressure of the lubricating oil within the lubricating oil path 51 of the crank pin 50 and the pressure of the lubricating oil within the cylindrical depression 18. In this instance, the axial center line 18ax of the cylindrical depression 18 is substantially in the same direction as the action direction of the centrifugal force, and the lubricating oil which has flowed out from the lubricating oil path 51 therefore flows toward a bottom surface side of the cylindrical depression 18. The lubricating oil which has been high in pressure rapidly decreases in pressure near the bottom surface of the cylindrical depression 18, so that production and breaking of cavities C (air bubbles) occur in the lubricating oil.

Thus, in the present invention, since production and breaking of the cavities C in the lubricating oil occur near the bottom surface of the cylindrical depression 18 located apart from the slide surface 13, cavitation erosion hardly occurs on the bottom surface near the circumferential end 15a of the first partial groove 15 and on the surface of the slide layer 81 adjacent to the circumferential end 15a of the first partial groove 15. Further, because the cylindrical depression 18 is formed so as to have a depth equal to or more than the depth (D1) of the first partial groove 15 at the communication portion 15a between the first partial groove 15 and the cylindrical depression 18 of the first half bearing 10, a side surface 18s (step) of the cylindrical depression 18 is formed at the location of the communication portion 15a. Moreover, the axial center line 18ax of the cylindrical depression 18 extends toward the center (axial center line) of the first half bearing 10, and thereby, the angle (θ2) of the side surface 18s on a circumferential direction forward side of the cylindrical depression 18 with respect to the plane 18p perpendicular to the axial center line 18ax of the cylindrical depression 18 is formed to be nearly perpendicular. Therefore, the cavities C (air bubbles) produced in the lubricating oil are not discharged to the first partial groove 15 from the cylindrical depression 18 before breaking, and cavitation erosion of the slide layer 81 is further suppressed.

Even if all the cavities C do not break in the cylindrical depression 18 and some of the cavities C are discharged from the cylindrical depression 18, the slide layer 81 is not easily eroded even in the case that the cavities C break at the communication portion 15a between the first partial groove 15 and the cylindrical depression 18, because the depth (D1) of the first partial groove 15 at the communication portion 15a between the first partial groove 15 and the cylindrical depression 18 is equal to or more than the thickness (T1) of the slide layer 81. That is, because of D1>T1, the slide layer 81 (bearing alloy) is removed from most of the inner surface of the first partial groove 15 near the communication portion 15a, and cavitation erosion of the slide layer 81 therefore does not occur.

Note that the axial center line 18ax of the cylindrical depression 18 may be tilted a maximum of 5° relative to a radial direction line that connects an opening center of the cylindrical depression 18 on the slide surface 13 of the first half bearing 10 to the axial center line of the first half bearing 10. Moreover, the cylindrical depression 18 may have a truncated-cone-shaped side surface 18s in contrast to the present embodiment. In these cases, the side surface 18s of the cylindrical depression 18 is preferably formed at an angle (θ2) of 85° to 95° with respect to the plane 18p perpendicular to the axial center line 18ax of the cylindrical depression 18.

Note that if the inner diameter (ID1) of the cylindrical depression 18 is excessively small, a part of the high-pressure lubricating oil flowing out from the exit opening 52 of the lubricating oil path 51 of the crank pin 50 directly flows to the first partial groove 15 as well, so that cavitation erosion may occur at the circumferential end 15a of the first partial groove 15 and in the slide surface 13 of the slide layer 81 adjacent to the circumferential end 15a of the first partial groove 15. On the contrary, if the inner diameter (ID1) of the cylindrical depression 18 is excessively large, there is concern that the load capacity of the first half bearing 10 might deteriorate due to the decrease of a slide area. Therefore, the inner diameter (ID1) of the cylindrical depression 18 is preferably a dimension corresponding to 100% to 150% of the length (W1) of the first partial groove 15 in the axial direction on the slide surface 13 at a location where the first partial groove 15 communicates with the cylindrical depression 18, and is 125% in the case of the present embodiment in particular.

In addition, although it has been shown that the depth of the cylindrical depression 18 is formed to be equal to or more than the depth (D1) of the first partial groove 15 at the communication portion 15a between the first partial groove 15 and the cylindrical depression 18 of the first half bearing 10, the cylindrical depression 18 should not be pierced to the outer peripheral surface 11 of the first half bearing 10 for the following reasons.

That is, if a cylindrical depression hole (through-hole) which pierces to the outer peripheral surface 11 so as to communicate with the end 15a on the circumferentially central portion side of the first partial groove 15 of the first half bearing 10 is formed as shown in JP S53-085245 A, the pressurized lubricating oil in the lubricating oil path 51 of the crank pin 50 passes through the through-hole of the cylindrical depression due to the effect of centrifugal force, and a large amount of lubricating oil flows out to the first supply groove 78a formed in the inner peripheral surface of the connecting rod 70, leading to a state where an internal space of the first partial groove 15 adjacent to the through-hole is instantaneously unfilled with oil, at the moment when communication between the exit opening 52 of the crank pin 50 and the through-hole of the cylindrical depression is started. Then, when the exit opening 52 of the lubricating oil path 51 of the crank pin 50 starts passing through the through-hole of the cylindrical depression, the lubricating oil in the lubricating oil path 51 of the crank pin 50 flows into the end of the first partial groove 15 which is not filled with oil, so that the pressure rapidly decreases, and production and breaking of cavities occur in the lubricating oil. Thus, cavitation erosion tends to occur at the circumferential end 15a of the first partial groove 15 and in the slide surface 13 of the slide layer 81 adjacent to the circumferential end 15a of the first partial groove 15.

Note that the sectional shape of the oil groove (and a partial groove) formed in the connecting rod bearing 1 is not specifically limited, and may be a rectangular shape, a trapezoidal shape, or an arc shape. Moreover, the bottom surface of the cylindrical depression 18 is not limited to a planar shape shown in the embodiment, and may be, for example, conical when the cylindrical depression is processed with a drill.

Furthermore, although the first half bearing 10 has at least one oil hole 19 in the configuration shown in the embodiment, the first half bearing 10 may be configured to have no oil hole. In the present invention, the presence of the oil hole 19 of the first half bearing 10 has no influence on the advantageous effects of the invention, and even in the case of a configuration having no oil hole, advantageous effects equivalent to those in the case of having an oil hole can be obtained owing to the action shown in the embodiment.

Still further, the aforementioned cylindrical depression 18 may also be provided at the oil groove raised portion (terminal portion) 17a of the second partial groove 17 of the first half bearing 10 on the rotation direction backward side of the crank pin so that the advantageous effects of the present invention can be obtained even when the connecting rod bearing 1 is improperly mounted.

Further yet, the corner edge of an opening of the cylindrical depression 18 on the slide surface 13 may be burred during processing. In this case, the corner edge of the opening may be chamfered.

Further yet, on the inner peripheral surface sides of the first half bearing 10 and the second half bearing 20, thin surface layers (overlay layers) of a lead-based material, a tin-based material, a tin-containing aluminum alloy, synthetic resin, or the like may be further formed on the surface of the slide layer, on the inner surfaces of the first partial groove, the second partial groove, and the oil groove, and on the inner surface of the cylindrical depression.

## Claims

1. A connecting rod bearing (1) for rotatably supporting a crank pin (50) of a crank shaft of an internal combustion engine, the crank pin (50) comprising a cylindrical barrel portion (55), a lubricating oil path (51) extending through the cylindrical barrel portion (55), and at least one exit opening (52) of the lubricating oil path (51) formed on an outer peripheral surface of the cylindrical barrel portion (55), wherein
the connecting rod bearing (1) comprises a first half bearing (10) and a second half bearing (20), the first half bearing (10) and the second half bearing (20) being combined into a cylindrical shape by bringing respective circumferential end faces of the first half bearing (10) and the second half bearing (20) into contact with each other,
each of the first half bearing (10) and the second half bearing (20) comprises a back metal layer (82) and a slide layer (81), the slide layer (81) constituting a slide surface (13, 23) of each half bearing (10, 20),
the second half bearing (20) comprises an oil groove (25) formed on a slide surface side to extend over the entire length of a circumferential direction (20) of the second half bearing (20), and at least one oil hole (29) passing through from an inner surface of the oil groove (25) to a bearing outer peripheral surface (21) of the second half bearing (20),
the first half bearing (10) comprises a first partial groove (15) formed on a slide surface side to extend from the circumferential end face of the first half bearing (10) on a forward side of a rotation direction (R) of the crank pin (50) toward a circumferentially central portion side of the first half bearing (10), and a second partial groove (17) formed on the slide surface side to extend from the circumferential end face of the first half bearing (10) on a backward side of the rotation direction (R) of the crank pin (50) toward the circumferentially central portion side, and
the oil groove (25) of the second half bearing (20), and the first partial groove (15) and the second partial groove (17) of the first half bearing (10) communicate with each other when the respective circumferential end faces of the first half bearing (10) and the second half bearing (20) are brought into contact with each other, **characterised in that**
the first half bearing (10) comprises a cylindrical depression (18) formed to communicate with the first partial groove (15) at a circumferential end (15a) thereof that is located on the circumferentially central portion side of the first half bearing (10),
the slide surface (13) between a circumferential end of the second partial groove (17) that is located on the circumferentially central portion side of the first half bearing (10), and a circumferential end of the cylindrical depression (18) that is located on the circumferentially central portion side of the first half bearing (10) extends at a circumferential angle (θ1) of 80° to 160°,
an axial center line (18ax) of the cylindrical depression (18) extends toward an axial center line of the first half bearing (10),
an inner diameter (ID1) of the cylindrical depression (18) measured on the slide surface (13) is 100% to 150% of an axial length (W1) of the first partial groove (15) that is measured at a location where the first partial groove (15) communicates with the cylindrical depression (18),
a depth (D1) of the first partial groove (15) that is measured at the location where the first partial groove (15) communicates with the cylindrical depression (18) is equal to or more than a thickness (T1) of the slide layer (81), and
a maximum depth (D2) of the cylindrical depression (18) is equal to or more than the depth (D1) of the first partial groove (15) that is measured at the location where the first partial groove (15) communicates with the cylindrical depression (18), but is configured so that the cylindrical depression (18) does not pass through to a bearing outer peripheral surface (11) of the first half bearing (10).

2. The connecting rod bearing (1) according to claim 1, **characterized in that** an angle (θ2) of a side surface of the cylindrical depression (18) with respect to a plane perpendicular to the axial center line is 85° to 95° in a cross section which includes the axial center line (18ax) of the cylindrical depression (18) and is perpendicular to an axial center line of the connecting rod bearing (1).

3. A bearing device (2) for rotatably supporting a crank pin (50) of a crank shaft of an internal combustion engine, the bearing device (2) comprising:
the connecting rod bearing (1) according to claim 1 or 2;
the crank pin (50); and
a connecting rod (70), wherein the connecting rod (70) comprises a connecting rod body portion (72) and a connecting rod cap portion (74), and when respective end faces of the connecting rod body portion (72) and the connecting rod cap portion (74) are brought into contact with each other, a semi-cylindrical first bearing holding hole (73) of the connecting rod body portion (72) and a semi-cylindrical second bearing holding hole (75) of the connecting rod cap portion (74) are combined, so that a large end portion having a cylindrical bearing holding hole (77) for holding the connecting rod bearing (1) is formed, **characterized in that**
the first bearing holding hole (73) comprises a first supply groove (78a) extending from an end face (72a) of the connecting rod body portion (72) on the forward side of the rotation direction (R) of the crank pin (50) toward the circumferentially central portion side, and a second supply groove (78b) extending from an end face (72b) of the connecting rod body portion (72) on the backward side of the rotation direction (R) of the crank pin (50) toward the circumferentially central portion side,
the second bearing holding hole (75) comprises a third supply groove (78c) extending over the entire length of the circumferential direction, and
the third supply groove (78c) is in communication with the first supply groove (78a) and the second supply groove (78b) by bringing the respective end faces of the connecting rod body portion (72) and the connecting rod cap portion (74) into contact with each other.

## Patentansprüche

1. Pleuellager (1) zum drehbaren Lagern eines Kurbelzapfens (50) einer Kurbelwelle eines Verbrennungsmotors, wobei der Kurbelzapfen (50) umfasst: einen zylindrischen Hülsenteil (55), einen Schmierölpfad (51), der sich durch den zylindrischen Hülsenteil (55) erstreckt, und mindestens eine Austrittsöffnung (52) des Schmierölpfads (51), die an einer Außenumfangsfläche des zylindrischen Hülsenteils (55) ausgebildet ist, wobei
das Pleuellager (1) ein erstes Halblager (10) und ein zweites Halblager (20) umfasst, wobei das erste Halblager (10) und das zweite Halblager (20) zu einer zylindrischen Form kombiniert werden, indem jeweilige Umfangsenden des ersten Halblager (10) und des zweiten Halblager (20) in Kontakt miteinander gebracht werden,
das erste Halblager (10) und das zweite Halblager (20) jeweils eine Stützmetallschicht (82) und eine Gleitschicht (81) umfassen, wobei die Gleitschicht (81) jeweils eine Gleitfläche (13, 23) von jedem Halblager (10, 20) bildet,
das zweite Halblager (20) umfasst: eine Ölnut (25), die an einer Gleitflächenseite so ausgebildet ist, dass sie sich über die gesamte Länge einer Umfangsrichtung (20) des zweiten Halblagers (20) erstreckt, und mindestens eine Ölbohrung (29), die von einer Innenfläche der Ölnut (25) zu einer Lageraußenumfangsfläche (21) des zweiten Halblagers (20) durchführt,
das erste Halblager (10) umfasst: eine erste Teilnut (15), die an einer Gleitflächenseite ausgebildet ist, um sich von der Umfangsendfläche des ersten Halblagers (10) auf einer Vorderseite einer Drehrichtung (R) des Kurbelzapfens (50) in Richtung auf eine Umfangsmittelabschnittsseite des ersten Halblagers (10) hin zu erstrecken, und eine zweite Teilnut (17), die an der Gleitoberflächenseite ausgebildet ist, um sich von der Umfangsendfläche des ersten Halblagers (10) auf einer rückwärtige Seite der Drehrichtung (R) des Kurbelzapfens (50) in Richtung auf die Umfangsmittelabschnittsseite hin zu erstrecken, und
die Ölnut (25) des zweiten Halblagers (20) und die erste Teilnut (15) und die zweite Teilnut (17) des ersten Halblagers (10) miteinander kommunizieren, wenn die jeweiligen Umfangsenden des ersten Halblagers (10) und des zweiten Halblagern (20) in Kontakt gebracht werden, gekennzeichnet wie folgt:
das erste Halblager (10) umfasst eine zylindrische Vertiefung (18), die zur Verbindung mit der ersten Teilnut (15) an einem Umfangsende (15a) derselben ausgebildet ist, das sich an der Umfangsmittelabschnittsseite des ersten Halblagers (10) befindet,
die Gleitfläche (13) zwischen einem Umfangsende der zweiten Teilnut (17), die sich auf der Umfangsmittelabschnittsseite des ersten Halblagers (10) befindet, und einem Umfangsende der zylindrischen Vertiefung (18), die sich auf der Umfangsmittelabschnittsseite des ersten Halblagers (10) befindet, erstreckt sich mit ein Umfangswinkel (θ1) von 80° bis 160°,
eine axiale Mittellinie (18ax) der zylindrischen Vertiefung (18) erstreckt sich zu einer axialen Mittellinie des ersten Halblagers (10) hin,
ein Innendurchmesser (ID1) der zylindrischen Vertiefung (18), gemessen an der Gleitfläche (13), beträgt 100% bis 150% einer axialen Länge (W1) der ersten Teilnut (15), die an einer Stelle gemessen wird, an der die erste Teilnut (15) mit der zylindrischen Vertiefung (18) kommuniziert,
eine Tiefe (D1) der ersten Teilnut (15), die an der Stelle gemessen wird, an der die erste Teilnut (15) mit der zylindrischen Vertiefung (18) kommuniziert, ist gleich oder größer als eine Dicke (T1) der Gleitschicht (81) und
eine maximale Tiefe (D2) der zylindrischen Vertiefung (18) ist gleich oder größer als die Tiefe (D1) der ersten Teilnut (15), die an der Stelle gemessen wird, an der die erste Teilnut (15) mit der zylindrischen Vertiefung (18) in Verbindung steht, ist jedoch so konfiguriert, dass die zylindrische Vertiefung (18) nicht zu einer Lageraußenumfangsfläche (11) des ersten Halblagers (10) durchtritt.

2. Pleuellager (1) nach Anspruch 1, **dadurch gekennzeichnet, dass** ein Winkel (θ2) einer Seitenfläche der zylindrischen Vertiefung (18) in Bezug auf eine Ebene senkrecht zur axialen Mittellinie 85° bis 95° beträgt in einem Querschnitt, der die axiale Mittellinie (18ax) der zylindrischen Vertiefung (18) einschließt und senkrecht zu einer axialen Mittellinie des Pleuellagers (1) liegt.

3. Lagervorrichtung (2) zum drehbaren Lagern eines Kurbelzapfens (50) einer Kurbelwelle eines Verbrennungsmotors, wobei die Lagervorrichtung (2) umfasst:
das Pleuellager (1) nach Anspruch 1 oder 2;
den Kurbelzapfen (50); und
eine Pleuelstange (70), wobei die Pleuelstange (70) einen Pleuelstangenkörperabschnitt (72) und einen Pleuelstangenkappenabschnitt (74) aufweist, und wenn jeweilige Endflächen des Pleuelstangenkörperabschnitts (72) und des Pleuelstangenkappenabschnitts (74) miteinander in Kontakt gebracht werden, ein halbzylindrisches erstes Lagerhalteloch (73) des Pleuelstangenkörperabschnitts (72) und ein halbzylindrisches zweites Lagerhalteloch (75) des Pleuelstangenkappenabschnitts (74) kombiniert sind, so dass ein großer Endabschnitt mit einem zylindrischen Lagerhalteloch (77) zum Halten des Pleuellagers (1) gebildet wird,
gekennzeichnet wie folgt:
das erste Lagerhalteloch (73) umfasst eine erste Zufuhrnut (78a), die sich von einer Endfläche (72a) des Pleuelstangenkörperabschnitts (72) auf der Vorderseite der Drehrichtung (R) des Kurbelzapfens (50) in Richtung der Umfangsmittelabschnittsseite erstreckt, und eine zweite Zufuhrnut (78b), die sich von einer Endfläche (72b) des Pleuelstangenkörperabschnitts (72) auf der Rückseite der Drehrichtung (R) des Kurbelzapfens (50) in Richtung der Umfangsmittelabschnittsseite erstreckt,
das zweite Lagerhalteloch (75) umfasst eine dritte Zufuhrnut (78c), die sich über die gesamte Länge der Umfangsrichtung erstreckt, und
die dritte Zufuhrnut (78c) steht mit der ersten Zufuhrnut (78a) und der zweiten Zufuhrnut (78b) in Verbindung, indem die jeweiligen Endflächen des Pleuelstangenkörperabschnitts (72) und des Pleuelstangenkappenabschnitts (74) in Kontakt miteinander gebracht werden.

## Revendications

1. Palier à tige de connexion (1) pour supporter de manière rotative un maneton (50) d'un vilebrequin d'un moteur à combustion interne, le maneton (50) comprenant une partie de corps cylindrique (55), un trajet d'huile de lubrification (51) s'étendant à travers la partie de corps cylindrique (55), et au moins une ouverture de sortie (52) du trajet d'huile de lubrification (51) formée sur une surface périphérique externe de la partie de corps cylindrique (55), dans lequel
le palier à tige de connexion (1) comprend un premier demi-palier (10) et un second demi-palier (20), le premier demi-palier (10) et le second demi-palier (20) étant combinés dans une forme cylindrique en amenant des faces d'extrémité périphérique respectives du premier demi-palier (10) et du second demi-palier (20) en contact l'une avec l'autre,
chacun du premier demi-palier (10) et du second demi-palier (20) comprend une couche métallique arrière (82) et une couche de glissement (81), la couche de glissement (81) constituant une surface de glissement (13, 23) de chaque demi-palier (10, 20),
le second demi-palier (20) comprend une rainure d'huile (25) formée sur un côté de surface de glissement pour s'étendre sur toute la longueur d'une direction circonférentielle (20) du second demi-palier (20), et au moins un trou d'huile (29) passant de manière traversante d'une surface interne de la rainure d'huile (25) à une surface périphérique externe de palier (21) du second demi-palier (20),
le premier demi-palier (10) comprend une première rainure partielle (15) formée sur un côté de surface de glissement pour s'étendre depuis la face d'extrémité circonférentielle du premier demi-palier (10) sur un côté avant d'une direction de rotation (R) du maneton (50) vers un côté de partie circonférentiellement centrale du premier demi-palier (10), et une deuxième rainure partielle (17) formée sur le côté de surface de glissement pour s'étendre depuis la face d'extrémité circonférentielle du premier demi-palier (10) sur un côté arrière de la direction de rotation (R) du maneton (50) vers le côté de partie circonférentiellement centrale, et
la rainure d'huile (25) du second demi-palier (20), et la première rainure partielle (15) et la deuxième rainure partielle (17) du premier demi-palier (10) communiquent l'une avec l'autre lorsque les faces d'extrémité circonférentielles respectives du premier demi-palier (10) et du second demi-palier (20) sont mises en contact l'une avec l'autre, **caractérisé en ce que**
le premier demi-palier (10) comprend un enfoncement cylindrique (18) formé pour communiquer avec la première rainure partielle (15) au niveau d'une extrémité circonférentielle (15a) de celle-ci situé du côté de partie circonférentiellement centrale du premier demi-palier (10),
la surface de glissement (13) entre une extrémité circonférentielle de la deuxième rainure partielle (17) qui est située du côté de partie circonférentiellement centrale du premier demi-palier (10), et une extrémité circonférentielle de l'enfoncement cylindrique (18) qui est située sur la partie circonférentiellement centrale du premier demi-palier (10) s'étend sur un angle circonférentiel (θ1) de 80° à 160°,
une ligne médiane axiale (18ax) de l'enfoncement cylindrique (18) s'étend vers une ligne médiane axiale du premier demi-palier (10),
un diamètre intérieur (ID1) de l'enfoncement cylindrique (18) mesuré sur la surface de glissement (13) représente 100 % à 150 % d'une longueur axiale (W1) de la première rainure partielle (15) qui est mesurée à un emplacement où la première rainure partielle (15) communique avec l'enfoncement cylindrique (18),
une profondeur (D1) de la première rainure partielle (15) mesurée à l'emplacement où la première rainure partielle (15) communique avec l'enfoncement cylindrique (18) est égale ou supérieure à une épaisseur (T1) de la couche de glissement (81), et
une profondeur maximale (D2) de l'enfoncement cylindrique (18) est égale ou supérieure à la profondeur (D1) de la première rainure partielle (15) mesurée à l'emplacement où la première rainure partielle (15) communique avec l'enfoncement cylindrique (18), mais est configurée pour que l'enfoncement cylindrique (18) ne passe pas de manière traversante vers une surface périphérique extérieure de palier (11) du premier demi-palier (10).

2. Palier à tige de connexion (1) selon la revendication 1, **caractérisé en ce qu'**un angle (θ2) d'une surface latérale de l'enfoncement cylindrique (18) par rapport à un plan perpendiculaire à la ligne médiane axiale est de 85° à 95° dans une section transversale qui comprend la ligne médiane axiale (18ax) de l'enfoncement cylindrique (18) et est perpendiculaire à une ligne médiane axiale du palier à tige de connexion (1).

3. Dispositif à tige de connexion (2) pour supporter en rotation un maneton (50) d'un vilebrequin d'un moteur à combustion interne, le dispositif de palier (2) comprenant :
le palier à tige de connexion (1) selon la revendication 1 ou 2 ;
le maneton (50) ; et
une tige de connexion (70), dans lequel la tige de connexion (70) comprenant une partie de corps de tige de connexion (72) et une partie de capuchon de tige de connexion (74), et lorsque des faces d'extrémité respectives de la partie de corps de tige de connexion (72) et de la partie de capuchon de tige de connexion (74) sont mises en contact l'une avec l'autre, un premier trou de maintien de palier (73) semi-cylindrique de la partie de corps de tige de connexion (72) et un second trou de maintien de palier (75) semi-cylindrique de la partie de capuchon de tige de connexion (74) sont combinés, de sorte qu'une grande partie d'extrémité comportant un trou de maintien de palier cylindrique (77) destiné à maintenir le palier à tige de connexion (1) est formée, **caractérisé en ce que**
le premier trou de maintien de palier (73) comprend une première rainure d'alimentation (78a) s'étendant depuis une face d'extrémité (72a) de la partie de corps de tige de connexion (72) sur le côté avant de la direction de rotation (R) du maneton (50) vers le côté de partie circonférentiellement centrale, et une seconde rainure d'alimentation (78b) s'étendant d'une face d'extrémité (72b) de la partie de corps de tige de connexion (72) sur le côté arrière de la direction de rotation (R) du maneton (50) vers le côté de partie circonférentiellement centrale,
le second trou de support de palier (75) comprend une troisième rainure d'alimentation (78c) s'étendant sur toute la longueur de la direction circonférentielle, et
la troisième rainure d'alimentation (78c) est en communication avec la première rainure d'alimentation (78a) et la deuxième rainure d'alimentation (78b) en amenant les faces d'extrémité respectives de la partie de corps de tige de connexion (72) et de la partie de capuchon de tige de connexion (74) en contact l'une avec l'autre.
